# EUROPÄISCHE PATENTSCHRIFT

(11) **EP 3 670 838 B1**
(45) Veröffentlichungstag und Bekanntmachung des Hinweises auf die Patenterteilung: **17.05.2023**
(21) Anmeldenummer: 19217145.2
(22) Anmeldetag: 17.12.2019
(51) Int. Cl.: F01D 5/28

(54) **LAUFSCHAUFELBLATT FÜR EINE STRÖMUNGSMASCHINE**
ROTOR TURBINE BLADE FOR A FLOW ENGINE
PALE D'AUBE MOBILE POUR UNE TURBOMACHINE

(30) Priorität: 19.12.2018 DE 102018222246
(43) Veröffentlichungstag der Anmeldung: 24.06.2020
(73) Patentinhaber: MTU Aero Engines AG, 80995 München (DE)
(72) Erfinder: Albert, Benedikt, 80995 München (DE); Sikorski, Siegfried, 80995 München (DE)

(56) Entgegenhaltungen:
- EP-A1- 3 181 814
- EP-A1- 3 287 265
- DE-A1- 2 644 083
- FR-A5- 2 195 255
- GB-A- 901 075

## Beschreibung

### Technisches Gebiet

Die vorliegende Erfindung betrifft ein Laufschaufelblatt für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist typischerweise in mehrere Module untergliedert aufgebaut, kann also bspw. ein Hochdruck- und ein Niederdruckturbinenmodul aufweisen. Jedes dieser Turbinenmodule umfasst dann in der Regel mehrere Stufen, wobei jede Stufe aus einem Leitschaufelkranz und einem stromab darauffolgenden Laufschaufelkranz aufgebaut ist. Auch der Verdichter ist typischerweise aus mehreren Stufen bzw. Modulen aufgebaut, weist also mehrere Laufschaufelkränze auf. Das im Folgenden diskutierte Laufschaufelblatt kann sowohl im Verdichter als auch in der Turbine Anwendung finden, bevorzugt ist Letzteres.

Beispiele für Schaufelblätter sind aus den Dokumenten FR2195255A5, EP3287265A1 und EP3181814A1 bekannt. Die DE2644083A1 offenbart eine Verbund-Laufschaufel mit schräg geneigten Fasern.

### Darstellung der Erfindung

Der vorliegenden Erfindung liegt das technische Problem zugrunde, ein besonders vorteilhaftes Laufschaufelblatt anzugeben.

Dies wird erfindungsgemäß mit dem Laufschaufelblatt gemäß Anspruch 1 gelöst. Dieses ist aus einem Schaufelblattmaterial aufgebaut, dass mit Fasern mechanisch verstärkt ist. Dabei sind die Fasern nicht stochastisch verteilt ausgerichtet, sondern gibt es eine oder mehrere Vorzugsrichtungen (im Folgenden "Faserrichtungen"). Eine Besonderheit liegt vorliegend in der Ausrichtung dieser Faserrichtung bzw. - richtungen, ist nämlich eine erste Faserrichtung gegenüber der Fädelachse, welche die Flächenschwerpunkte der Querschnittsprofile des Schaufelblatts verbindet, verkippt. Prinzipiell könnte angenommen werden, dass eine Ausrichtung der Fasern ausschließlich in Längsrichtung des Schaufelblatts, nämlich entlang der Fädelachse, eine optimale und adäquate mechanische Verstärkung schafft. Die Erfinder haben jedoch festgestellt, dass sich mit der Verkippung der ersten Faserrichtung eine bessere Anpassung an das tatsächliche Lastkollektiv erreichen lässt. Bedingt durch die Drehung sowie die Ausdehnung des Schaufelblattmaterials ändert sich die Orientierung des Fliehkraftvektors, so dass dieser im Betrieb eine Neigung zur Fädelachse aufweist. Indem die erste Faserrichtung geneigt zur Fädelachse ausgerichtet ist bzw. wird, kann erreicht werden, dass die erste Faserrichtung im Betrieb parallel zur Hauptlastrichtung, nämlich der Richtung des resultierenden Fliehkraftvektors ausgerichtet ist. Dadurch können diese geneigt zur Fädelachse ausgerichteten Fasern optimal zur Lastaufnahme beitragen. Indem die Maximallast nicht schräg sondern entlang dieser Fasern wirkt, können zudem Scherkräfte zwischen diesem Fasen reduziert werden. Dadurch kann die Beanspruchung des einbettenden Matrixwerkstoffs verringert werden und die Bauteilfestigkeit verbessert werden.

Bevorzugte Ausgestaltungen finden sich in den abhängigen Ansprüchen und der gesamten Beschreibung, wobei in der Darstellung der Merkmale nicht immer im Einzelnen zwischen dem Laufschaufelblatt bzw. einem entsprechenden Turbinenmodul oder zugehörigen Herstellungsverfahren unterschieden wird. Die Offenbarung ist zumindest implizit hinsichtlich sämtlicher Anspruchskategorien zu lesen.

Der Anteil der Fasern des Laufschaufelblatts, der in der ersten Faserrichtung ausgerichtet ist, beträgt mindestens 20% der Fasern des Laufschaufelblatts oder kann in einigen Ausgestaltungen auch mindestens 30% der Fasern des Laufschaufelblatts betragen.

Generell bezieht sich im Rahmen dieser Offenbarung "axial" auf die Längsachse der Strömungsmaschine, die bspw. mit einer Drehachse der Laufschaufelblätter bzw. - kränze zusammenfällt. "Radial" betrifft die dazu senkrechten, davon weg weisenden Radialrichtungen, und ein "Umlauf" bzw. "umlaufend" oder die "Umlaufrichtung" betreffen die Drehung um die Längsachse. "Ein" und "eine" sind im Rahmen dieser Offenbarung ohne ausdrücklich gegenteilige Angabe als unbestimmte Artikel und damit immer auch als "mindestens ein" bzw. "mindestens eine" zu lesen. Es hat dann also bspw. ein Laufschaufelkranz eine Mehrzahl erfindungsgemäße Laufschaufelblätter.

Wie sich auch aus der Stand der Technik-Würdigung ergibt, die ausdrücklich Teil der Offenbarung sein soll, wird das Laufschaufelblatt im Gaskanal der Strömungsmaschine angeordnet, je nach Einsatzgebiet im Verdichter- oder Heißgaskanal. Bezogen auf die Umströmung im Gaskanal hat das Schaufelblatt stromauf eine Vorderkante und stromab eine Hinterkante, sowie zwei die Vorder- und die Hinterkante verbindende Seitenflächen (die Saug- und Druckseite bilden). Die hauptanspruchsgemäß und mit den abhängigen Ansprüchen noch näher konkretisierte Ausrichtung der Fasern soll jedenfalls in den Seitenflächen des Schaufelblatts gegeben sein. Aufgrund der Schaufelblattgeometrie kann es an der Vorder-/Hinterkante auch Abweichungen geben.

Bezogen auf das Fasermaterial, also das textile Halbzeug, liegen die Faserrichtungen bevorzugt in einer Ebene. Im Schaufelblatt kann das textile Halbzeug dann auch gebogen sein, beispielsweise der Profilform entsprechend entlang der Seitenfläche gebogen sein oder auch anders angeordnet bzw. orientiert. Die einzelnen Faserrichtungen müssen dann nicht mehr überall, d.h. in jedem Volumenelement der Schaufel, in einer planen Ebene liegen. D.h. die genannte erste und dementsprechend weitere, z.B. eine zweite und eine dritte, Faserrichtung können an verschiedenen Stellen bzw. Volumenelementen innerhalb der Schaufel jeweils in verschiedene Richtungen weisen bzw. verschieden orientiert sein. In den Volumenelementen selbst kann die relative Orientierung der Fasern zueinander dabei jedoch im Wesentlichen gleich sein. Wie bereits erwähnt, ist die erste Faserrichtung entlang der aus Fliehkraft- und Gaskraftvektor resultierenden Kraftrichtung ausgerichtet. Dabei meint die Ausrichtung "entlang" der Kraftrichtung einen dazu im Wesentlichen parallelen Verlauf, also bspw. eine Verkippung von nicht mehr als 5°, 4°, 3°, 2° bzw. 1°. Bevorzugt liegt die erste Faserrichtung tatsächlich parallel zur Kraftrichtung (0°). Mit den entlang dem um die Gaskräfte korrigierten Fliehkraftvektor orientierten Fasern lassen sich auch Schubkräfte zwischen den Fasern minimieren, im Ergebnis wird der Vektor der Fliehkraft optimal unterstützt.

Die Kraftrichtung wird dabei für einen Betriebspunkt ermittelt, in dem sich die höchste Drehzahl / maximale Belastung des Laufschaufelblatts ergibt. Im Falle des Flugtriebwerks kann dies bspw. den Bedingungen beim Start entsprechen. Aufgrund der Gaskräfte hat die resultierende Kraftrichtung dann nicht nur die fliehkraftbedingte Radialkomponente, sondern auch eine Axialkomponente. Wenngleich deren Anteil im Verhältnis geringer als der Fliehkraftanteil sein wird, lässt sich mit der entsprechenden Ausrichtung die Festigkeit deutlich erhöhen.

Gemäß einer bevorzugten Ausführungsform ist die erste Faserrichtung gegenüber einer Fädelachse des Laufschaufelblatts um mindestens 2° verkippt, weiter und besonders bevorzugt mindestens 3° bzw. 4°. Vorteilhafte Obergrenzen, die auch unabhängig von den Untergrenzen offenbart sein sollen, liegen bei in der Reihenfolge der Nennung zunehmend bevorzugt höchstens 10°, 9°, 8°, 7°, 6° bzw. 5°. Die Fädelachse ergibt sich als Verbindungslinie der Flächenschwerpunkte des Profils des Laufschaufelblatts. Bevorzugt ist die Fädelachse bereits ihrerseits gegenüber der Radialrichtung verkippt, hat das Schaufelblatt nämlich einen *Lean.* Dieser ist typischerweise so gewählt, dass die Schaufel im Betrieb am Fuß momentfrei ist, und zwar wenn analog dem vorstehend geschilderten Vorgehen Zentrifugal- und Gaskräfte berücksichtigt werden.

In einigen Ausführungsformen ist erste Faserrichtung gegenüber einer zu der Längsachse senkrechten Radialrichtung verkippt, beispielsweise um mindestens 15°. Dabei kann in einigen dieser Ausführungsformen auch die Fädelachse gegenüber der Radialrichtung verkippt sein.

Wie bereits erwähnt, gibt es in dem Laufschaufelblatt bzw. dem eingeformten/eingesinterten Halbzeug bevorzugt nicht nur eine einzige, sondern mehrere Vorzugsrichtungen (eine zweite und ggf. dritte Faserrichtung). Diese weiteren Faserrichtungen liegen, insbesondere am jeweiligen Ort bzw. im jeweils betrachteten Volumenelement, gewinkelt zur ersten Faserrichtung (vorzugsweise unter einem Winkel zwischen 30° und 60°). Diese in der zweiten und/oder dritten Faserrichtung orientierten Fasern können besonders vorteilshaft Lasten quer zur ersten Faserrichtung, z.B. bei einer Torsion und/oder Biegung, aufnehmen. Zwar sind solche Querlasten im Allgemeinen wesentlich geringer als die fliehkraftbedingte Hauptlast entlang der ersten Faserrichtung. Allerdings können auch schon vergleichsweise geringe Querlasten zu einer Scherung zwischen den Fasen der ersten Faserrichtung führen und dadurch die Festigkeit des faserverstärkten Verbundwerkstoffs erheblich beeinträchtigen und/oder limitieren. Indem eine oder mehr weitere Faserrichtungen vorgesehen werden, können diese schädlichen Querlasten gezielt aufgenommen werden und Spannungen zwischen den einzelnen Fasern minimiert werden, wodurch die Belastung des Matrixwerkstoffs reduziert werden kann. Dadurch kann die Festigkeit , insbesondere das Festigkeitspotenzial hinsichtlich einer Kriechverformung speziell für die Belastungen im Turbinenbereich, wesentlich gesteigert werden.

In einigen Ausgestaltungen ist ein Anteil von mindestens 20% oder auch mindestens 30% aller Fasern des Laufschaufelblatts in der zweiten Faserrichtung ausgerichtet ist.

In bevorzugter Ausgestaltung schließen die erste und die zweite Faserrichtung einen Winkel α₁ miteinander ein, der mindestens 10° beträgt, weiter und besonders bevorzugt mindestens 20° bzw. 30°. Im Allgemeinen kann der Winkel auch 90° betragen, insbesondere wenn das Fasermaterial ein Gewebe, insbesondere aus keramischen Fasern, ist (in dem es zwei zueinander senkrechte Faserrichtungen gibt). Es kann aber auch ein kleinerer α₁ vorgesehen sein, bspw. von höchstens 80° bzw. 70°, besonders bevorzugt können rund 60° sein.

Gemäß einer bevorzugten Ausführungsform hat dann ein weiterer Teil der Fasern, beispielsweise mindestens 15% oder mindestens 20% der Fasern des Laufschaufelblatts, eine dritte Faserrichtung, die gewinkelt zu der ersten und zweiten Faserrichtung liegt. Die erste und die dritte Faserrichtung schließen miteinander einen Winkel α₂ ein, der bevorzugt mindestens 10°, weiter und besonders bevorzugt mindestens 20° bzw. 30° beträgt. Vorteilhafte Obergrenzen liegen wiederum bei in der Reihenfolge der Nennung zunehmend bevorzugt höchstens 90°, 80° bzw. 70°, besonders bevorzugt können rund 60° sein. Bevorzugt sind die Winkel α₁ und α₂ gleich groß. Bei der Betrachtung von Winkeln zwischen den Faserrichtungen wird generell der kleinere von zwei Winkeln zugrundegelegt, den die beiden Richtungen miteinander einschließen.

Das Fasermaterial bzw. Faserhalbzeug ist bevorzugt ein Gewebe oder Geflecht, insbesondere aus keramischen Fasern. Bevorzugt gibt es in dem Faserhalbzeug genau zwei (bei einem Gewebe) oder genau drei (bei einem Geflecht) Faserichtungen. Die erste Faserrichtung ist bevorzugt die Hauptfaserrichtung, die entsprechend ausgerichteten Fasern haben also den größten gewichtsprozentigen Anteil an dem Fasermaterial bzw. textilen Halbzeug. In der Fliehkraftrichtung (korrigiert um den Gaskraftvektor) wirken die höchsten Kräfte auf das Laufschaufelblatt, weswegen überproportional viele Fasern entsprechend ausgerichtet sind. Die zweite bzw. dritte Faserrichtung sind dann Nebenfaserrichtungen. Mit diesen lässt sich das Schaufelblatt wie erwähnt hinsichtlich Torsions- und/oder Biegemomenten stabilisieren, was erhebliche Vorteile gegenüber einer nur unidirektionalen Verstärkung ergeben kann.

In bevorzugter Ausgestaltung ist das Schaufelblattmaterial keramisch und sind auch die Fasern keramisch. Vorzugsweise ist das Schaufelblattmaterial ein keramischer Faserverbundwerkstoff mit keramischen Fasern die in einer keramischen Matrix eingebettet sind bzw. ist CMC (ceramic matrix composite) mit keramischen Fasern. Keramische Materialien können hinsichtlich der Temperaturbeständigkeit und speziell mit Blick auf eine Anwendung im Turbinenbereich von Interesse sein. Bevorzugt sind die Fasern und das Matrixmaterial aus demselben keramischen Material vorgesehen, was hinsichtlich einer Verringerung bzw. Vermeidung von unterschiedlichen thermischen Dehnungen von Vorteil sein kann. Als Keramiken kommen bspw. Aluminiumoxid und Siliziumcarbid infrage.

Die Erfindung betrifft auch ein Turbinenmodul, insbesondere ein Niederdruckturbinenmodul, das ein Laufschaufelblatt gemäß der vorliegenden Offenbarung aufweist. Bevorzugt ist zumindest ein Laufschaufelkranz vollständig mit entsprechenden Laufschaufelblättern bestückt, es können auch mehrere Laufschaufelkränze entsprechend vorgesehen sein. Speziell in der schnelllaufenden Niederdruckturbine können die Vorteile der erfindungsgemäß angepassten Faserverstärkung im Besonderen zu tragen kommen.

Die Erfindung betrifft auch ein computerimplementiertes Verfahren zum Entwerfen eines entsprechenden Schaufelblatts oder Turbinenmoduls. Dabei wird anhand eines Computermodells des Laufschaufelblatts, bspw. anhand eines CAD-Modells, der im Betrieb wirkende Fliehkraft- und Gaskraftwerktor ermittelt. Dies kann bspw. in einer FEM-Simulation erfolgen. Dabei wird jener Betriebspunkt zugrundegelegt, in dem sich die höchste Belastung ergibt, typischerweise die Drehzahl maximal ist. Die Summe dieser Kräfte ergibt eine zur Radialrichtung verkippte Kraftrichtung. Danach bestimmt sich die Orientierung der ersten Faserrichtung des textilen Halbzeugs.

Die Erfindung betrifft auch ein Verfahren zum Herstellen eines Laufschaufelblatts bzw. Turbinenmoduls, wobei das Laufschaufelblatt im Anschluss an den eben geschilderten Designprozess durch Einbetten des textilen Halbzeugs, nämlich des Fasermaterials, in das Matrixmaterial zur Bereitstellung des Laufschaufelblattmaterials gefertigt wird. Je nach Material kann das Einbetten an sich im Zuge eines Sinterns erfolgen (Aluminiumoxid), der Verfestigungsprozess kann aber auch mit der Ausbildung chemischer Verbindungen unter Hochtemperaturbehandlung einhergehen (Siliziumcarbid).

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: ein Laufschaufelblatt in einer schematischen Seitenansicht;
- Figur 3: ein in das Laufschaufelblatt gemäß Fig. 2 zur Verstärkung eingebettetes Fasermaterial in schematischer Darstellung.

### Bevorzugte Ausführung der Erfindung

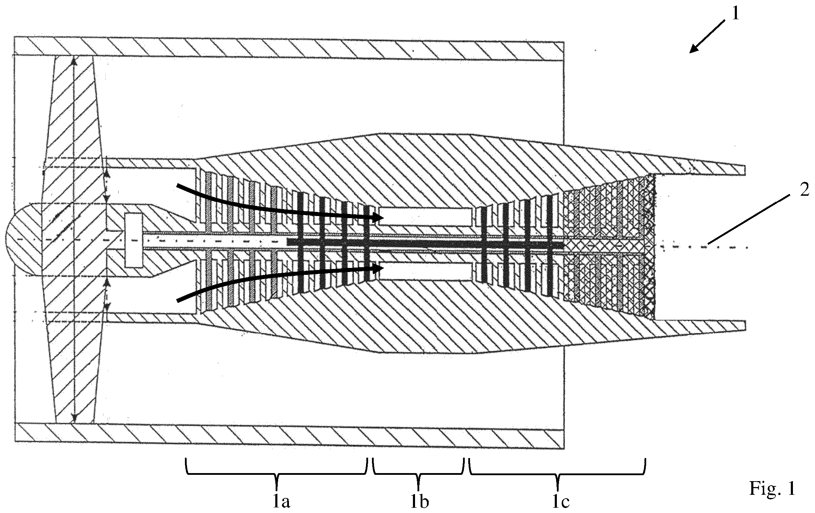

**Fig. 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut, jede Stufe setzt sich aus einem Leit- und einem darauffolgenden Laufschaufelkranz zusammen. Die Laufschaufelkränze rotieren im Betrieb um die Längsachse 2 der Strömungsmaschine 1. Im Verdichter 1a wird die angesaugte Luft komprimiert, und dann in der nachgelagerten Brennkammer 1b mit hinzugemischtem Kerosin verbrannt. Das Heißgas durchströmt den Heißgaskanal 3 und treibt dabei die Laufschaufelkränze an, die um die Längsachse 2 rotieren.

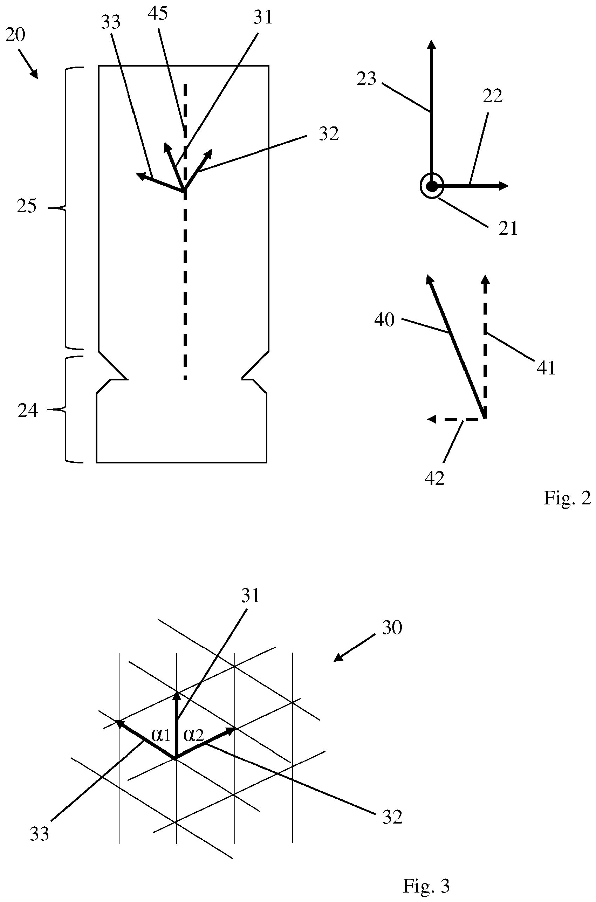

**Fig. 2** zeigt eine Laufschaufel 20 in einer schematischen Seitenansicht, also entgegen der Umlaufrichtung 21 daraufblickend (gekennzeichnet sind ferner die Axialrichtung 22, sowie die Radialrichtung 23). Die Laufschaufel 20 ist Teil eines Laufschaufelkranzes in der Turbine 1c. Radial innen weist die Laufschaufel 20 einen Schaufelfuß 24 auf, radial außen findet sich das im Gaskanal angeordnete Laufschaufelblatt 25. Die Laufschaufel 20 bzw. das Laufschaufelblatt 25 ist aus einem keramischen Material hergestellt, in das zur mechanischen Verstärkung ein Fasermaterial 30 eingebettet ist, vergleiche Fig. 3.
**Fig. 3** zeigt das Fasermaterial 30 in schematischer Darstellung, es gibt drei Vorzugsrichtungen: Eine erste Faserrichtung 31 ist die Hauptfaserrichtung (größter gewichtsprozentiger Anteil am Fasermaterial 30). Ferner gibt es eine zweite Faserrichtung 32, nämlich eine Nebenfaserrichtung, die mit der ersten Faserrichtung 31 einen Winkel α₁ von rund 60° einschließt. Weiterhin gibt es eine dritte Faserrichtung 33 (ebenfalls Nebenfaserrichtung), die mit der ersten Faserrichtung 31 einen Winkel α₂ einschließt, der ebenfalls rund 60° beträgt. Ein entsprechendes Fasermaterial 30 kann als Geflecht aus filament- bzw. fadenförmig vorgehaltenen Fasern hergestellt werden.

Das Fasermaterial 30 ist derart in das Laufschaufelblatt 25 eingebettet, dass die erste Faserrichtung 31 zur Radialrichtung 23 verkippt liegt. Diese Orientierung resultiert daraus, dass bei der Ermittlung einer im Betrieb auf das Laufschaufelblatt 25 wirkenden Kraftrichtung 40 nicht nur ein Fliehkraftvektor 41, sondern auch ein Gaskraftvektor 42 berücksichtigt wird. Auch die zweite und die dritte Faserrichtung 32, 33 liegen entsprechend etwas verkippt im Laufschaufelblatt 25, sie stabilisieren es hinsichtlich Torsion und Biegung.

Wie aus der Darstellung gemäß Fig. 2 ersichtlich, ist die erste Faserrichtung 31 gegenüber einer Fädelachse 45 (Verbindungslinie der Flächenschwerpunkte des Profils) verkippt. Vorliegend ist die Fädelachse 45 der Einfachheit halber parallel zur Radialrichtung 23 dargestellt, in der Praxis wird sie auch ihrerseits eine gewisse Verkippung dazu haben.

**BEZUGSZEICHENLISTE**

| | | |
|---|---|---|
| Strömungsmaschine | | 1 |
| | Verdichter | 1a |
| | Brennkammer | 1b |
| | Turbine | 1c |
| Längsachse | | 2 |
| Laufschaufel | | 20 |
| Umlaufrichtung | | 21 |
| Axialrichtung | | 22 |
| Radialrichtung | | 23 |
| Schaufelfuß | | 24 |
| Laufschaufelblatt | | 25 |
| Fasermaterial | | 30 |
| Erste Faserrichtung (Hauptfaserrichtung) | | 31 |
| Zweite Faserrichtung (Nebenfaserrichtung) | | 32 |
| Dritte Faserrichtung (Nebenfaserrichtung) | | 33 |
| Kraftrichtung | | 40 |
| Fliehkraftvektor | | 41 |
| Gaskraftvektor | | 42 |
| Fädelachse | | 45 |

## Patentansprüche

1. Laufschaufelblatt (25) für eine Strömungsmaschine (1), welches zur Rotation um eine Längsachse (2) der Strömungsmaschine (1) ausgelegt ist,
wobei das Laufschaufelblatt (25) aus einem mit einem Fasermaterial (30) verstärkten Schaufelblattmaterial aufgebaut ist,
**dadurch gekennzeichnet, dass** zumindest ein Teil der Fasern des Fasermaterials (30), nämlich mindestens 20%, vorzugsweise mindestens 30% der Fasern, in einer ersten Faserrichtung (31) ausgerichtet ist, wobei die erste Faserrichtung (31) entlang einer Kraftrichtung (40) ausgerichtet ist, die sich durch Vektoraddition eines im Betrieb, für einen Betriebspunkt in dem sich die höchste Drehzahl/maximale Belastung der Laufschaufel ergibt, auf das Laufschaufelblatt (25) wirkenden Fliehkraft- (41) und Gaskraftvektors (42) ergibt, und wobei die erste Faserrichtung (31) gegenüber der Fädelachse des Laufschaufelblatts (25) verkippt ist.

2. Laufschaufelblatt (25) nach Anspruch 1, bei welchem die erste Faserrichtung (31) gegenüber einer Fädelachse (45) des Laufschaufelblatts (25), die sich als Verbindungslinie von Flächenschwerpunkten des Laufschaufelblattprofils ergibt, um mindestens 2° und höchstens 10° verkippt ist, und/oder wobei die erste Faserrichtung (31) gegenüber einer zu der Längsachse (2) senkrechten Radialrichtung (23) verkippt liegt, insbesondere um mindestens 15°.

3. Laufschaufelblatt (25) nach einem der vorstehenden Ansprüche, bei welchem ein anderer Teil der Fasern des Fasermaterials (30), insbesondere mindestens 20%, vorzugsweise mindestens 30% der Fasern, in einer zweiten Faserrichtung (32) ausgerichtet ist, die gewinkelt zu der ersten Faserrichtung (31) liegt.

4. Laufschaufelblatt (25) nach Anspruch 3, bei welchem die erste (31) und die zweite Faserrichtung (32) in dem Fasermaterial (30) miteinander einen Winkel α₁ einschließen, der mindestens 10° und höchstens 90° beträgt.

5. Laufschaufelblatt (25) nach Anspruch 3 oder 4, bei welchem ein weiterer Teil der Fasern in dem Fasermaterial (30) in einer dritten Faserrichtung (33), insbesondere mindestens 15%, vorzugsweise mindestens 20% der Fasern, ausgerichtet ist, die gewinkelt zu der ersten (31) und der zweiten Faserrichtung (32) liegt.

6. Laufschaufelblatt (25) nach Anspruch 5, bei welchem die erste (31) und die dritte Faserrichtung (33) in dem Fasermaterial (30) miteinander einen Winkel α₂ einschließen, der mindestens 10° und höchstens 90° beträgt.

7. Laufschaufelblatt (25) nach Anspruch 5 oder 6 in Verbindung mit Anspruch 3 oder 4, bei welchem die erste (31) und die zweite Faserrichtung (32) in dem Fasermaterial (30) miteinander einen Winkel α₁ einschließen und die erste (31) und die dritte Faserrichtung (33) miteinander einen Winkel α₂ einschließen, wobei α₁ und α₂ gleich groß sind.

8. Laufschaufelblatt (25) nach Anspruch 7, bei welchem α₁ und α₂ jeweils zwischen 30° und 75°, vorzugsweise jeweils zwischen 45° und 70° liegen, insbesondere jeweils gleich 60° sind.

9. Laufschaufelblatt (25) nach einem der Ansprüche 3 bis 8, bei welchem ein gewichtsprozentiger Anteil der in der ersten Faserrichtung (31) orientierten Fasern an dem Fasermaterial (30) größer als ein jeweiliger gewichtsprozentiger Anteil der in der zweiten Faserrichtung (32) und, falls vorhanden, dritten Faserrichtung (33) orientierten Fasern ist.

10. Laufschaufelblatt (25) nach einem der vorstehenden Ansprüche, bei welchem das Fasermaterial (30) ein Gewebe oder Geflecht ist, in welchem insbesondere im wesentlich genau zwei oder genau drei verschiedene Faserrichtungen vorkommen.

11. Laufschaufelblatt (25) nach einem der vorstehenden Ansprüche, bei welchem das Schaufelblattmaterial keramisch ist und auch das Fasermaterial (30) keramisch ist.

12. Turbinenmodul, insbesondere Niederdruckturbinenmodul, mit einem Laufschaufelblatt (25) nach einem der vorstehenden Ansprüche.

13. Computerimplementiertes Verfahren zum Entwerfen eines Laufschaufelblatts (25) nach einem der Ansprüche 1 bis 11 oder eines Turbinenmoduls nach Anspruch 12, bei welchem anhand eines Computermodells des Laufschaufelblatts (25) ein im Betrieb wirkender Fliehkraftvektor (41) und ein Gaskraftvektor (42) ermittelt werden, wobei die erste Faserrichtung (31) dann entlang einer Kraftrichtung (40) ausgerichtet wird, die sich durch Vektoraddition des Fliehkraft- (41) und Gaskraftvektors (42) ergibt.

14. Verfahren zum Herstellen eines Laufschaufelblatts (25) nach einem der Ansprüche 1 bis 11 oder eines Turbinenmoduls nach Anspruch 12, bei welchem das Laufschaufelblatt (25) in einem Verfahren nach Anspruch 13 entworfen und dann durch Einbetten des Fasermaterials (30) in das Laufschaufelblattmaterial gefertigt wird.

## Claims

1. Rotor blade (25) for a turbomachine (1), which is designed for rotation about a longitudinal axis (2) of the turbomachine (1),
the rotor blade (25) being constructed from a blade material reinforced with a fiber material (30),
**characterized in that**
at least a portion of the fibers of the fiber material (30), specifically at least 20%, preferably at least 30%, of the fibers, is oriented in a first fiber direction (31), the first fiber direction (31) being oriented along a force direction (40) obtained by vector addition of a centrifugal force vector (41) and a gas force vector (42) acting on the rotor blade (25) during operation, for an operating point at which the highest rotational speed/maximum load of the rotor blade occurs, and the first fiber direction (31) being tilted with respect to the stacking axis of the rotor blade (25).

2. Rotor blade (25) according to claim 1, wherein the first fiber direction (31) is tilted by at least 2° and at most 10° with respect to a stacking axis (45) of the rotor blade (25), which is a connecting line of the centroids of the rotor blade profile, and/or wherein the first fiber direction (31) is tilted with respect to a radial direction (23) perpendicular to the longitudinal axis (2), in particular by at least 15°.

3. Rotor blade (25) according to either of the preceding claims, wherein another portion of the fibers of the fiber material (30), in particular at least 20%, preferably at least 30% of the fibers, is oriented in a second fiber direction (32) which is at an angle to the first fiber direction (31).

4. Rotor blade (25) according to claim 3, wherein the first fiber direction (31) and the second fiber direction (32) in the fiber material (30) enclose an angle α₁ which is at least 10° and at most 90°.

5. Rotor blade (25) according to either claim 3 or claim 4, wherein a further portion of the fibers in the fiber material (30), in particular at least 15%, preferably at least 20% of the fibers, is oriented in a third fiber direction (33) which is at an angle to the first fiber direction (31) and the second fiber direction (32).

6. Rotor blade (25) according to claim 5, wherein the first fiber direction (31) and the third fiber direction (33) in the fiber material (30) enclose an angle α₂ which is at least 10° and at most 90°.

7. Rotor blade (25) according to either claim 5 or claim 6 in conjunction with claim 3 or claim 4, wherein the first fiber direction (31) and the second fiber direction (32) in the fiber material (30) enclose an angle α₁, and the first fiber direction (31) and the third fiber direction (33) enclose an angle α₂, wherein α₁and α₂ are equal.

8. Rotor blade (25) according to claim 7, wherein α₁ and α₂ are in each case between 30° and 75°, preferably between 45° and 70°, in particular equal to 60°.

9. Rotor blade (25) according to any of claims 3 to 8, wherein a proportion by weight of the fibers of the fiber material (30) that are oriented in the first fiber direction (31) is greater than a relevant proportion by weight of the fibers oriented in the second fiber direction (32) and, if present, in the third fiber direction (33).

10. Rotor blade (25) according to any of the preceding claims, wherein the fiber material (30) is a woven fabric or a braided fabric, in which in particular substantially exactly two or exactly three different fiber directions occur.

11. Rotor blade (25) according to any of the preceding claims, wherein the blade material is ceramic and the fiber material (30) is also ceramic.

12. Turbine module, in particular a low-pressure turbine module, comprising a rotor blade (25) according to any of the preceding claims.

13. Computer-implemented method for designing a rotor blade (25) according to any of claims 1 to 11 or a turbine module according to claim 12, wherein a centrifugal force vector (41) acting during operation and a gas force vector (42) are determined on the basis of a computer model of the rotor blade (25), wherein the first fiber direction (31) is then oriented along a force direction (40) obtained by vector addition of the centrifugal force vector (41) and the gas force vector (42).

14. Method for manufacturing a rotor blade (25) according to any of claims 1 to 11 or a turbine module according to claim 12, wherein the rotor blade (25) is designed in a method according to claim 13 and is then manufactured by embedding the fiber material (30) into the rotor blade material.

## Revendications

1. Pale d'aube mobile (25) pour une turbomachine (1), laquelle pale est conçue pour tourner autour d'un axe longitudinal (2) de la turbomachine (1),
dans laquelle la pale d'aube mobile (25) est constituée d'un matériau de pale d'aube renforcé par un matériau fibreux (30),
**caractérisée en ce que**
au moins une partie des fibres du matériau fibreux (30), à savoir au moins 20 %, de préférence au moins 30 % des fibres, sont orientées dans une première direction de fibres (31), la première direction de fibres (31) étant orientée le long d'une direction de force (40), laquelle résulte d'une addition vectorielle d'un vecteur de force centrifuge (41) et d'un vecteur de force de gaz (42) agissant sur la pale d'aube mobile (25) pendant le fonctionnement, pour un point de fonctionnement auquel la vitesse de rotation/la charge de l'aube mobile sont maximales, et la première direction de fibres (31) étant inclinée par rapport à l'axe de filage de la pale d'aube mobile (25).

2. Pale d'aube mobile (25) selon la revendication 1, dans laquelle la première direction de fibres (31) est inclinée d'au moins 2° et d'au plus 10° par rapport à un axe de filage (45) de la pale d'aube mobile (25) qui résulte d'une ligne de liaison de centres de gravité de surface du profil de pale d'aube mobile, et/ou la première direction de fibres (31) étant inclinée par rapport à une direction radiale (23) perpendiculaire à l'axe longitudinal (2), en particulier d'au moins 15°.

3. Pale d'aube mobile (25) selon l'une quelconque des revendications précédentes, dans laquelle une autre partie des fibres du matériau fibreux (30), en particulier au moins 20 %, de préférence au moins 30 % des fibres, est orientée dans une deuxième direction de fibres (32) qui est inclinée par rapport à la première direction de fibres (31).

4. Pale d'aube mobile (25) selon la revendication 3, dans laquelle la première (31) et la deuxième direction de fibres (32) forment un angle α₁ d'au moins 10° et d'au plus 90° entre elles dans le matériau fibreux (30).

5. Pale d'aube mobile (25) selon la revendication 3 ou 4, dans laquelle une autre partie des fibres dans le matériau fibreux (30), en particulier au moins 15 %, de préférence au moins 20 % des fibres, sont orientées dans une troisième direction de fibres (33), laquelle est inclinée par rapport à la première (31) et à la deuxième direction de fibres (32).

6. Pale d'aube mobile (25) selon la revendication 5, dans laquelle la première (31) et la troisième direction de fibres (33) forment un angle α₂ d'au moins 10° et d'au plus 90° entre elles dans le matériau fibreux (30).

7. Pale d'aube mobile (25) selon la revendication 5 ou 6 en liaison avec la revendication 3 ou 4, dans laquelle la première (31) et la deuxième direction de fibres (32) forment un angle α₁ entre elles dans le matériau fibreux (30) et la première (31) et la troisième direction de fibres (33) forment un angle α₂ entre elles, α₁ et α₂ étant égaux.

8. Pale d'aube mobile (25) selon la revendication 7, dans laquelle α₁ et α₂ sont respectivement situés entre 30° et 75°, de préférence respectivement entre 45° et 70°, en particulier sont respectivement égaux à 60°.

9. Pale d'aube mobile (25) selon l'une des revendications 3 à 8, dans laquelle une part en pourcentage en poids des fibres orientées dans la première direction de fibres (31) dans le matériau fibreux (30) est supérieure à une part en pourcentage en poids respective des fibres orientées dans la deuxième direction de fibres (32) et, le cas échéant, dans la troisième direction de fibres (33).

10. Pale d'aube mobile (25) selon l'une quelconque des revendications précédentes, dans laquelle le matériau fibreux (30) est un tissage ou un tressage, dans lequel sont présentes en particulier sensiblement exactement deux ou exactement trois directions de fibres différentes.

11. Pale d'aube mobile (25) selon l'une quelconque des revendications précédentes, dans laquelle le matériau de pale d'aube est en céramique et le matériau fibreux (30) est également en céramique.

12. Module de turbine, en particulier module de turbine à basse pression, comportant une pale d'aube mobile (25) selon l'une quelconque des revendications précédentes.

13. Procédé mis en oeuvre par ordinateur pour la conception d'une pale d'aube mobile (25) selon l'une des revendications 1 à 11 ou d'un module de turbine selon la revendication 12, dans lequel sont déterminés, au moyen d'un modèle informatique de la pale d'aube mobile (25), un vecteur de force centrifuge (41) et un vecteur de force de gaz (42) agissant pendant le fonctionnement, la première direction de fibres (31) étant alors orientée le long d'une direction de force (40) qui résulte de l'addition vectorielle du vecteur de force centrifuge (41) et du vecteur de force de gaz (42).

14. Procédé permettant la production d'une pale d'aube mobile (25) selon l'une des revendications 1 à 11 ou d'un module de turbine selon la revendication 12, dans lequel la pale d'aube mobile (25) est conçue dans un procédé selon la revendication 13 puis fabriquée par l'introduction du matériau fibreux (30) dans le matériau de pale d'aube mobile.
